(19) Europäisches Patentamt / European Patent Office / Office européen des brevets

(11) **EP 4 692 264 A1**

(12) **EUROPEAN PATENT APPLICATION**
published in accordance with Art. 153(4) EPC

(43) Date of publication:
**11.02.2026 Bulletin 2026/07**

(21) Application number: 24784662.9

(22) Date of filing: **06.03.2024**

(51) International Patent Classification (IPC):
$C09J\ 1/00$ (2006.01)    $B22F\ 1/00$ (2022.01)
$B22F\ 1/05$ (2022.01)    $B22F\ 1/14$ (2022.01)
$B22F\ 7/08$ (2006.01)    $H01B\ 1/22$ (2006.01)

(52) Cooperative Patent Classification (CPC):
**B22F 1/00; B22F 1/05; B22F 1/14; B22F 7/08;
C09J 1/00; H01B 1/22**

(86) International application number:
**PCT/JP2024/008575**

(87) International publication number:
**WO 2024/209867 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 JP 2023063000**

(71) Applicant: **National University Corporation
Hokkaido University
Hokkaido 060-0808 (JP)**

(72) Inventors:
• **YONEZAWA, Tetsu
Sapporo-shi, Hokkaido 060-0808 (JP)**
• **TSUKAMOTO, Hiroki
Sapporo-shi, Hokkaido 060-0808 (JP)**

(74) Representative: **J A Kemp LLP
80 Turnmill Street
London EC1M 5QU (GB)**

(54) **SHEET-LIKE JOINING MATERIAL, METHOD FOR PRODUCING JOINED BODY, AND JOINED BODY**

(57) A sheet-like bonding material comprising: slightly oxidized copper-coated copper particles each including a copper particle as a core and a shell containing slightly oxidized copper composed of one or more of $Cu_{64}O$ and $Cu_8O$, wherein the slightly oxidized copper composed of one or more of $Cu_{64}O$ and $Cu_8O$ is in the form of slightly oxidized copper particles having an average particle diameter of 1 nm or more and 20 nm or less; and a medium, wherein a content of the slightly oxidized copper-coated copper particles is more than 85% by mass.

[FIG.11]

EP 4 692 264 A1

**Description**

TECHNICAL FIELD

The present disclosure relates to a sheet-like bonding material, a method for producing a bonded body, and a bonded body.

BACKGROUND ART

Conventionally, solder has been used for bonding between members such as bonding between a substrate and a component or bonding between circuits in semiconductor devices. For power semiconductors, LSIs, and the like, which are operated at a high temperature of 150°C or higher, among semiconductor devices, high melting point lead solder has been used for bonding as a bonding material. As a bonding material free of lead, a technique of subjecting silver nanoparticles to low-temperature sintering to form a sintered silver layer has been proposed, for example.

Furthermore, Patent Document 1 discloses a technique of obtaining a bonded body using flake-shaped copper particles as a bonding material. Specifically, there is proposed a bonded body including a sintered metal layer having sufficient connection reliability at a temperature cycle test including high temperature conditions, the bonded body including a first member, a second member, and a sintered metal layer bonding the first member and the second member, in which the sintered metal layer has a structure derived from flake-shaped copper particles which are oriented in approximately parallel to an interface between the first member or the second member and the sintered metal layer, and the degree of orientation order S of the structure derived from the flake-shaped copper particles is 0.88 or more and 1.00 or less as calculated by a prescribed formula (1). In addition, Patent Document 2 discloses, as a bonding sheet that is less prone to cause a deterioration of its sinterability due to oxidation of copper particles, is capable of forming a dense bonding layer with few voids, and enables electronic components and the like to be bonded together with high strength, a bonding sheet including copper particles and a solvent having a boiling point of 150°C or higher, in which the content ratio (mass ratio) between the copper particles and the solvent is 99 : 1 to 90 : 10, the copper particles have a BET diameter in the range of 40 nm or more and 750 nm or less, and the solvent has an OH group in the structure thereof.

In addition, Patent Documents 3 to 7 disclose various forms of copper particles and copper oxide particles as copper particles.

PRIOR ART DOCUMENTS

PATENT DOCUMENTS

Patent Document 1: JP-A-2021-63300
Patent Document 2: JP-A-2022-113002
Patent Document 3: WO 2019/106739 A
Patent Document 4: WO 2022/045252 A
Patent Document 5: JP-A-2020-29392
Patent Document 6: JP-A-2020-100896
Patent Document 7: JP-A-2019-203172

SUMMARY OF THE INVENTION

PROBLEMS TO BE SOLVED BY THE INVENTION

In recent years, for example, in a semiconductor device including a SiC power semiconductor or the like, a bonding portion between members constituting the semiconductor device is required to exhibit sufficiently high adhesion strength (also referred to as "adhesion strength"). On the other hand, sufficiently high adhesion strength cannot be achieved by the bonding methods and in the bonded bodies having been proposed so far including Patent Documents 1 and 2. Patent Documents 3 to 7 do not investigate bonding. The present disclosure has been made in view of the above circumstances, and one object of the present disclosure is to provide a sheet-like bonding material useful for the production of a bonded body that exhibits high adhesion strength, a method for producing a bonded body using the sheet-like bonding material, and a bonded body that exhibits high adhesion strength.

SOLUTIONS TO THE PROBLEMS

Aspect 1 of the present invention is
a sheet-like bonding material comprising:

slightly oxidized copper-coated copper particles each including a copper particle as a core and a shell containing slightly oxidized copper composed of one or more of $Cu_{64}O$ and $Cu_8O$, wherein the slightly oxidized copper composed of one or more of $Cu_{64}O$ and $Cu_8O$ is in the form of slightly oxidized copper particles having an average particle diameter of 1 nm or more and 20 nm or less; and
a medium,
wherein a content of the slightly oxidized copper-coated copper particles is more than 85% by mass.

Aspect 2 of the present invention is
the sheet-like bonding material according to Aspect 1, wherein the copper particles as cores have an average particle diameter of 20 nm or more and less than 2 $\mu$m.
Aspect 3 of the present invention is
the sheet-like bonding material according to Aspect 1 or 2, wherein the sheet-like bonding material has a thickness of 1 $\mu$m or more and 1 mm or less.
Aspect 4 of the present invention is
a method for producing a bonded body, comprising:

disposing the sheet-like bonding material according to any one of Aspects 1 to 3 between a first member and a second member to obtain a laminate; and
heating the laminate at 100 to 500°C to bond the first member and the second member with a sintered product of the sheet-like bonding material interposed therebetween.

Aspect 5 of the present invention is
the method for producing a bonded body according to Aspect 4, wherein the laminate is heated under a pressure of 40 kPa or more.
Aspect 6 of the present invention is
the method for producing a bonded body according to Aspect 4 or 5, wherein at least one of the first member and the second member is a semiconductor element, and the bonded body is a semiconductor device.
Aspect 7 of the present invention is
a bonded body comprising: a first member; a second member; and a sintered product of the sheet-like bonding material according to any one of Aspects 1 to 3, the sintered product bonding the first member and the second member.
Aspect 8 of the present invention is
the bonded body according to Aspect 7, wherein at least one of the first member and the second member is a semiconductor element, and the bonded body is a semiconductor device.

EFFECTS OF THE INVENTION

According to the present disclosure, it is possible to provide a sheet-like bonding material useful for the production of a bonded body that exhibits high adhesion strength, a method for producing a bonded body using the sheet-like bonding material, and a bonded body that exhibits high adhesion strength.

BRIEF DESCRIPTION OF THE DRAWINGS

[Fig. 1] Fig. 1 is a graph illustrating the relationship between the particle size (core particle size) of a core particle and the number of contact points per sheet.
[Fig. 2] Fig. 2 is a schematic sectional view illustrating the sintered state of conventional particles.
[Fig. 3] Fig. 3 is a schematic sectional view illustrating the sintered state of nanoparticles of the present embodiment.
[Fig. 4] Fig. 4 is a graph illustrating the relationship between the content of copper particles and the volume of a medium.
[Fig. 5A] Fig. 5A is a diagram for explaining the reason for setting the load during sintering to 40 kPa or more, and is a diagram illustrating the state before sintering.
[Fig. 5B] Fig. 5B is a diagram for explaining the reason for setting the load during sintering to 40 kPa or more, and is a diagram illustrating a case without pressurization.

[Fig. 5C] Fig. 5C is a diagram for explaining the reason for setting the load during sintering to 40 kPa or more, and is a diagram illustrating a case with pressurization.

[Fig. 6] Fig. 6 shows a TEM image of particles obtained in Example.

[Fig. 7] Fig. 7 shows STEM images of particles obtained in Example and the STEM images on the right side are enlarged images of the respective lattice spacings shown in the STEM image on the left side.

[Fig. 8] Fig. 8 illustrates the TG-DTA measurement results in Example.

[Fig. 9] Fig. 9 is a diagram showing a preparation procedure of a sample for evaluation of bonding calcination in Example.

[Fig. 10A] Fig. 10A is a schematic view of a copper test piece used for the preparation of a sample for evaluation of bonding calcination in Example.

[Fig. 10B] Fig. 10B is a schematic view illustrating hot pressing in the bonding calcination evaluation test in Example.

[Fig. 10C] Fig. 10C is a schematic sectional view illustrating the method of the bonding calcination evaluation test in Example.

[Fig. 11] Fig. 11 is a diagram showing the result of the bonding calcination evaluation test (pressurization at 15 MPa, bonding for 15 minutes) in Example.

DETAILED DESCRIPTION

Among five types of copper oxides, namely, $CuO$, $Cu_2O$, $Cu_4O_3$, $Cu_8O$, and $Cu_{64}O$, $Cu_{64}O$ and $Cu_8O$ have a smaller proportion of oxygen atoms and lower stability than other copper oxides, and thus can be reduced to metallic copper with low energy. These copper oxides have a longer interatomic distance than metallic copper, and the reduction reaction to metallic copper accompanied by a change of the crystal structure facilitates diffusion of copper atoms and dramatically promotes sintering of particles. The present inventors have previously focused on the fact that $Cu_{64}O$ and $Cu_8O$ (collectively referred to as "slightly oxidized coppers") are useful for sintering at a low temperature, and have studied a slightly oxidized copper-containing particles having at least one of these slightly oxidized coppers on their surfaces. In addition, the present inventors have found slightly oxidized copper-coated copper particles each having a copper particle as a core and a shell including slightly oxidized copper.

Use of copper particles containing the slightly oxidized coppers for a paste facilitates low-temperature sintering, and therefore the paste is considered to be useful as a conductive paste for printed electronics or the like, or as a bonding paste. In view of this consideration, as an application of the slightly oxidized copper-coated copper particles, evaluation as a die attach paste was first performed. As a result, it was found that as the concentration of the slightly oxidized copper-coated copper particles contained in the paste was higher, the concentration of the dispersion medium was relatively reduced, generation of voids and cracks associated with volatilization of the dispersion medium could be suppressed, and the adhesion strength was increased. However, when the concentration of the slightly oxidized copper-coated copper particles contained in the paste was more than 85% by mass, the paste became clayey or powdery, and it became very difficult to apply the paste. In addition, the use of such a clayey or powdery paste for application is problematic in that it is impossible to obtain a uniform coating film and the man-hour increases.

In view of these problems, the present inventors have found that with any sheet-like bonding material comprising: slightly oxidized copper-coated copper particles each including a copper particle as a core and a shell containing slightly oxidized copper composed of one or more of $Cu_{64}O$ and $Cu_8O$, wherein the slightly oxidized copper composed of one or more of $Cu_{64}O$ and $Cu_8O$ is in the form of slightly oxidized copper particles having an average particle diameter of 1 nm or more and 20 nm or less; and a medium, wherein a content of the slightly oxidized copper-coated copper particles is more than 85% by mass, a bonded body having high adhesion strength can be obtained through simplifying the bonding step and performing sintering at a low temperature. In the following, a sheet-like bonding material, a method for producing a bonded body, and a bonded body will be described in order.

<Sheet-like bonding material>

The slightly oxidized copper-coated copper particles and the medium contained in the sheet-like bonding material will be described in order.

[Slightly oxidized copper-coated copper particles]

The slightly oxidized copper-coated copper particles contained in the sheet-like bonding material of the present embodiment are core-shell slightly oxidized copper-containing particles (slightly oxidized copper-coated copper particles) each including a copper particle as a core and a shell containing slightly oxidized copper composed of one or more of $Cu_{64}O$ and $Cu_8O$ (the slightly oxidized copper composed of one or more of $Cu_{64}O$ and $Cu_8O$ is in the form of slightly oxidized copper particles having an average particle diameter of 1 nm or more and 20 nm or less). The "copper" merely referred to like "copper" in "copper particles" means metallic copper and is distinguished from copper oxide. Due to the fact that the core-shell slightly oxidized copper-containing particles and the medium also acting as a reducing agent are contained in the sheet-like bonding material, nanoparticles of $Cu_{64}O$ and $Cu_8O$, which constitute the shell and are to be reduced to metallic copper by heating, densely connect adjacent copper fine particle cores, and sintering between the core particles is dramatically promoted. The resulting sintered product has a structure in which copper fine particle cores having high crystallinity are densely connected, and is expected to have high mechanical strength. For example, in a conventional composition of slightly oxidized copper particles composed of at least one of $Cu_{64}O$ particles and $Cu_8O$ particles, copper particles, and copper clusters, it has been difficult to uniformly disperse them. In contrast, in the slightly oxidized copper-coated copper particles having the core-shell structure, the problem regarding dispersion is solved, and sintering between the slightly oxidized copper particles such as $Cu_{64}O$ on the surface of a copper particle as a core can be promoted during sintering as described above. The copper particles and the copper fine particles of Patent Documents 2 and 5 to 7 are not in the core-shell form as described above, but are in the form of composition (mixed particles) or the like, and cannot contribute to solving the above-described problem.

As to the size of the copper particles as cores of the slightly oxidized copper-coated copper particles, the average particle diameter is preferably 20 nm or more, and more preferably more than 20 nm and less than 2 $\mu$m from the viewpoint described below. The reason why the average particle diameter of the core copper particles has been set to 20 nm or more will be described as follows. The smaller the size of fine particles/nanoparticles, the greater the cohesive force, and the more difficult it is to easily disperse the fine particles/nanoparticles in a medium. Therefore, from the viewpoint of uniform and easy dispersion and stabilization of the dispersion state, the average particle diameter of the core copper particles has been set to 20 nm or more. Furthermore, to maintain the strength of a resulting sintered compact, the core copper particles are required to be highly crystalline from the viewpoint as a bonding material. To obtain highly crystalline particles, it is common to use a synthesis means in which a temperature near the melting point of the metal is attained, such as a high-temperature pyrolysis method, an atomization method, or an oxygen combustion method. The crystallite size of the submicron-sized copper fine particles obtained by these methods is about 50 nm. On the other hand, also in the liquid phase reduction method, which is a low-temperature synthesis method, submicron-sized copper fine particles that have a crystallite size of 17 to 50 nm are obtained through devising the synthesis method. As a result of separate experimental confirmation by the present inventors, practical adhesion strength was obtained with a copper particle paste having a crystallite size of about 20 nm. Therefore, the crystallite size of the core copper particles is preferably at least 20 nm, and is preferably 40 nm or more to obtain a sintered compact with higher strength. For this reason, the average particle diameter of the core copper particles has been set to 20 nm or more (because the particle size cannot be smaller than the crystallite size). From the viewpoint of providing slightly oxidized copper particles having a prescribed size on the surfaces of core copper particles, the average particle diameter of the core copper particles has been set to 20 nm or more. The average particle diameter of the core copper particles is preferably 40 nm or more from the viewpoint of the crystallite size described above.

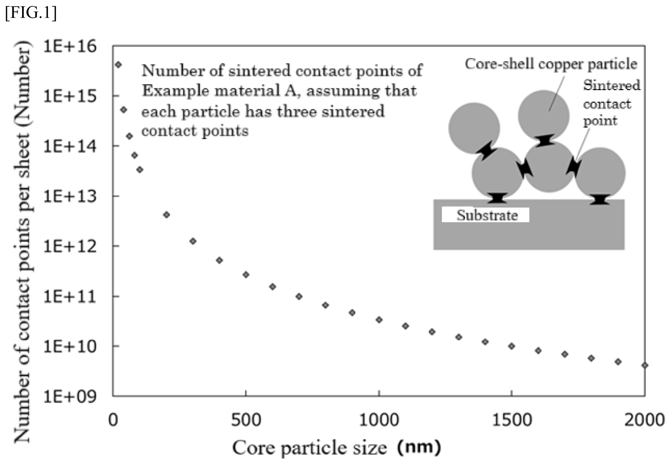

Next, the reason why the average particle diameter of the core copper particles has been set to less than 2 $\mu$m will be described. The sintered compact is a structure in which a core particle and another core particle are necked-bonded through sintering of shell nanoparticles. The larger the particle size of the core particles, the smaller the number of core particles per unit volume, and accordingly, the number of sintered contact points bonding the core particles decreases. Fig. 1 is a diagram illustrating the relationship between the particle size (core particle size) of a core particle and the number of sintered contact points (the number of contact points per sheet) assuming the sheet-like bonding material A in Example described later. Fig. 1 shows, for example, that when the number of contact points at a core particle size of 100 nm and the number of contact points at a core particle size of 2 $\mu$m are compared, the number of contact points at a core particle size of 100 nm is 8000 times the number of contact points at a core particle size of 2 $\mu$m, and these are significantly different. When an equal load is applied to such a sintered compact, the load applied to each sintered contact point of the particles having a core particle size of 2 $\mu$m is 8000 times as large as the load applied to the particles having a core particle size of 100 nm, and it is difficult to secure strength. From experimental findings, it has also been confirmed that the adhesion strength attained when core particles having a core particle size of 2 $\mu$m are used is less than 20 MPa, which is practical strength. For this reason, the average particle diameter of the core copper particles has been set to less than 2 $\mu$m. In addition, it is beneficial to set the average particle diameter of the core copper particles to be less than 2 $\mu$m from the viewpoint of being able to expect an anchor effect on a copper foil for semiconductors because the surface roughness of a copper foil for semiconductors is about 1 to 3 $\mu$m. The average particle diameter of the core copper particles is preferably 300 nm or less.

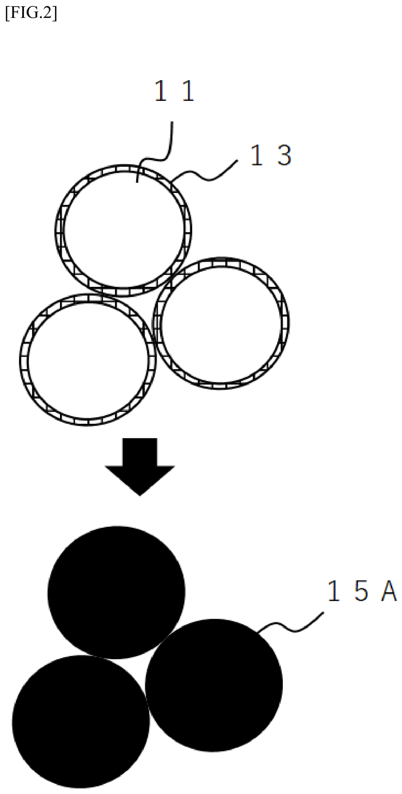

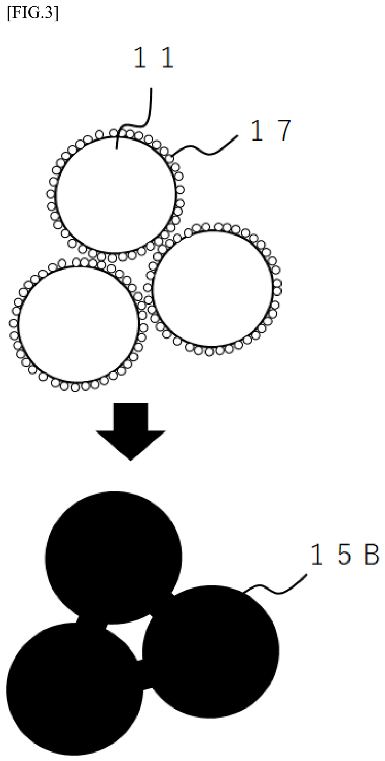

The slightly oxidized copper composed of one or more of $Cu_{64}O$ and $Cu_8O$ that forms the shell of the slightly oxidized copper-coated copper particle is in the form of a plurality of particulate matters, and the average particle diameter of the particulate matters is 1 nm or more, preferably more than 1 nm and 20 nm or less. Advantages over the prior art derived from that the shell in the present embodiment are composed of nanoparticles having a size of 1 nm or more and 20 nm or less as described above will be described below with reference to Figs. 2 and 3. For example, in the case of conventional particles in which the oxide film 13 is formed on the surface of the core copper particles 11 as in Patent Documents 3 and 4, sintering of a plurality of particles occurs at points as shown in the upper part of Fig. 2, whereas in the nanoparticle shells according to the present embodiment, sintering of the widely spread nanoparticles 17 occurs in wide ranges around the core copper particles 11 as shown in the upper part of Fig. 3. As a result, in the case of conventional particles, as illustrated in the lower part of Fig. 2, a sintered compact 15A sintered with point contact and having small bonding points is obtained, whereas in the case of nanoparticles in the present embodiment, a strong sintered compact 15B with wide necking ranges is obtained. Thus, the slightly oxidized copper-coated copper particles of the present embodiment, in which the shell is composed of slightly oxidized copper particles having an average particle diameter of 1 nm or more and 20 nm or less, are suitable as a bonding material.

The thickness of the shell (deposition thickness of the plurality of particulate matters) may be, for example, 1 to 20 nm. The shell including slightly oxidized copper composed of one or more of $Cu_{64}O$ and $Cu_8O$ is sintered in the course of being reduced to copper, but the crystallinity of the shell is not as high as that of the core copper particle. Therefore, an excessively thick shell invites concerns that the mechanical strength deteriorates. From these viewpoints, the thickness of the shell is preferably 20 nm or less as described above.

The slightly oxidized copper forming the shell of the slightly oxidized copper-coated copper particles may be a mixture of slightly oxidized copper particles differing in size, and may be, for example, mixed particles of one or more of $Cu_{64}O$ and $Cu_8O$ having an average particle diameter of 1 nm to 20 nm and $Cu_{64}O$ having an average particle diameter of 0.1 $\mu$m to 1 $\mu$m.

In addition to the slightly oxidized copper composed of one or more of $Cu_{64}O$ and $Cu_8O$, for example, copper oxides such as CuO and $Cu_2O$ used as raw materials are allowed to be contained in the shell in a trace amount at a level at which sinterability or electrical conductivity is not inhibited. Preferably, copper oxides used as raw materials such as CuO and $Cu_2O$ are not contained. The shell is preferably formed of a slightly oxidized copper particles composed of one or more of $Cu_{64}O$ and $Cu_8O$ and having an average particle diameter of 1 nm or more and 20 nm or less, and more preferably formed of a slightly oxidized copper particles made of $Cu_{64}O$ or composed of $Cu_{64}O$ and $Cu_8O$ and having an average particle diameter of 1 nm or more and 20 nm or less.

The slightly oxidized copper-coated copper particles can be produced by the method described below, but the method to be used for this purpose is not limited thereto, and the slightly oxidized copper-coated copper particles may be produced by a method different from the following production method.

[Method for producing slightly oxidized copper-coated copper particles]

The method for producing the core-shell type slightly oxidized copper-coated copper particles each including a copper particle as a core and a shell including slightly oxidized copper composed of one or more of $Cu_{64}O$ and $Cu_8O$ (the slightly oxidized copper composed of one or more of $Cu_{64}O$ and $Cu_8O$ is in the form of slightly oxidized copper particles having an average particle diameter of 1 nm or more and 20 nm or less) according to the present embodiment includes:

preparing copper oxide-coated copper raw material particles each having a copper raw material particle as a core and a copper oxide film including one or more of CuO and $Cu_2O$ as a shell, and
mixing the copper oxide-coated copper raw material particles with a solution containing an amine compound and a complexing agent, and subsequently adding a reducing agent and allowing the resultant to react in an oxygen-containing atmosphere. Hereinafter, the conditions of the production method described above will be described in detail.

[Step of preparing copper oxide-coated copper raw material particles]

First, copper oxide-coated copper raw material particles each having a copper raw material particle as a core and a copper oxide film containing one or more of CuO and $Cu_2O$ as a shell are prepared. The particles are preferably core-shell type copper oxide-coated copper raw material particles each having a copper raw material particle as a core and coated with preferably a copper oxide composed of one or more of CuO and $Cu_2O$, more preferably a copper oxide made of $Cu_2O$. The copper oxide-coated copper raw material particles having such a configuration are preferable because a reduction reaction from copper oxide to copper and an oxidation reaction from copper to a slightly oxidized substance occur on the surface of the core copper particles in a reaction step described later, and thus desired core-shell type particles are easily obtained.

As the copper oxide-coated copper raw material particles, a commercially available product may be used. Alternatively, particles having a surface oxide film formed by natural oxidation of copper particles may be used, or particles having a surface oxide film formed by subjecting the surface of copper particles to an oxidation treatment may be used. Alternatively, a mixture obtained by, for example, supplying a copper oxide containing one or more of CuO and $Cu_2O$ (for example, a copper oxide in a powdery form) to copper raw material particles with no or almost no copper oxide formed on the surfaces thereof by adding the copper oxide to a dispersion containing the copper raw material particles or applying the copper oxide to the surfaces of the copper raw material particles may be used as raw material particles though the form thereof is different from that of the copper oxide-coated copper raw material particles. This form cannot be said to be a preferred raw material because the surfaces of the core copper particles are not necessarily covered with copper oxide, but similar particles can therewith be obtained more easily. A surface oxide film formed by natural oxidation is formed only due to the fact that copper particles are present in the air. Therefore, it is considered that the commercially available copper particles also have been naturally oxidized by being present in the air, and the particles on which a surface oxide film is formed by natural oxidation of the copper particles also include commercially available copper particles.

The copper raw material particles as cores preferably have an average particle diameter of, for example, 20 nm or more and less than 2 $\mu$m for the same reason as that for the average particle diameter of the core copper particles described above. In addition, the copper oxide film containing one or more of CuO and $Cu_2O$ present on the surface of each copper raw material particle as a core may have a thickness of 20 nm or less. In the present description, the "particle size" refers to a primary particle size and a circle equivalent diameter, and the "average particle diameter" refers to a median diameter of 150 or more particles randomly selected from a SEM image or a TEM image.

As the copper oxide film containing one or more of CuO and $Cu_2O$ (preferably, a copper oxide film made of $Cu_2O$) present on the surface of the copper oxide-coated copper raw material particle, an oxide film with a degree of natural oxidation undetectable by X-ray diffraction is sufficient. The copper oxide film of the copper oxide-coated copper raw material particles may be more than the natural oxide film. For example, the proportion of the copper oxide containing one or more of CuO and $Cu_2O$ accounting for in the copper oxide-coated copper raw material particles may be 1% by mass or more. When it is desired to form a thick shell including slightly oxidized copper composed of one or more of $Cu_{64}O$ and $Cu_8O$ in the core-shell type slightly oxidized copper-coated copper particles to be finally obtained, it is permitted to actively oxidize the copper oxide-coated copper raw material particles. In that case, if the amount of the copper oxide on the surface accounting for in the copper oxide-coated copper raw material particles is excessively large, the particles including slightly oxidized copper composed of one or more of $Cu_{64}O$ and $Cu_8O$ is likely to be present as an independent aggregate in addition to constituting a shell. In addition, the shell including slightly oxidized copper composed of one or more of $Cu_{64}O$ and $Cu_8O$ has lower crystallinity when sintered at a low temperature as compared with core copper particles having high crystallinity, and thus there is a concern that the mechanical strength is deteriorated when the shell is thick. From these viewpoints, the proportion of the copper oxide containing one or more of CuO and $Cu_2O$ accounting for in the copper oxide-coated copper raw material particles is preferably 10% by mass or less.

[Reaction step]

The copper oxide-coated copper raw material particles are mixed with a solution containing an amine compound and a complexing agent, and then a reducing agent is added and the resultant is allowed to react. Hereinafter, a complexing agent and the like which are necessary for the reaction as stated above will be described.

(Complexing agent)

In the present embodiment, the copper oxide contained in the copper oxide-coated copper raw material particles is allowed to react with a complexing agent to form complex ions of copper. As described above, by ionizing copper in the copper oxide-coated copper raw material particles, the rate of reduction by a reducing agent can be made significantly greater than that of reduction of a solid copper oxide. Examples of the complexing agent include carboxylic acids. Examples of the carboxylic acids include formic acid, saturated fatty acids, unsaturated fatty acids, hydroxy acids, aromatic carboxylic acids, and terpene-based carboxylic acids. These may be monocarboxylic acids or dicarboxylic acids. These may be used singly or two or more thereof may be used in combination. The aliphatic monocarboxylic acid may be either linear or branched, and may be either a saturated aliphatic monocarboxylic acid or an unsaturated aliphatic monocarboxylic acid. Examples of a linear saturated aliphatic monocarboxylic acid include acetic acid (two carbon atoms), propionic acid (three carbon atoms), butyric acid (four carbon atoms), valeric acid (five carbon atoms), and caproic acid (six carbon atoms).

The aliphatic dicarboxylic acid may be either linear or branched, and may be either a saturated aliphatic dicarboxylic acid or an unsaturated aliphatic dicarboxylic acid. Aliphatic dicarboxylic acids may be used singly or two or more thereof may be used in combination. Examples of the aliphatic dicarboxylic acid include adipic acid, pimelic acid, suberic acid, azelaic acid, sebacic acid, 1,0-nonane dicarboxylic acid, 1,10-decane dicarboxylic acid, brassylic acid, 1,12-dodecane dicarboxylic acid, 1,13-tridecane dicarboxylic acid, thapsic acid, 1,15-pentadecane dicarboxylic acid, and 1,16-hexadecane dicarboxylic acid. Examples of the aromatic carboxylic acid include benzoic acid, phthalic acid, isophthalic acid, terephthalic acid, hemimellitic acid, trimellitic acid, and trimesic acid. As a terpene-based carboxylic acid, those contained in rosin and the like can be used. Examples thereof include abietic acid, neoabietic acid, parastrinic acid, pimaric acid, isopimaric acid, and desidroabietic acid.

Among them, it is preferable to use acetic acid, which is easy to handle and also easy to treat after the reaction, as a complexing agent.

The addition amount of the complexing agent to be used for the reaction is not particularly limited, but is preferably 0.05 times or more and 15 times or less in molar ratio, and may be 2 times or more and 15 times or less in molar ratio, with respect to the copper contained in the copper oxide-coated copper raw material particles as a starting material from the viewpoint of promoting complex ion formation of copper in order to promote the generation of $Cu_{64}O$ and $Cu_8O$.

(Amine compound)

A compound having an amino group (hereinafter, referred to as "amine compound") is added as a protective agent. The amine compound also contributes to complex ion formation of copper. The amine compound is not particularly limited, and for example, an alkanolamine, a diamine, and an aminocarboxylic acid are preferably used. Among them, it is more preferable to use an alkanolamine. Examples of the alkanolamine include 2-amino-1-butanol, 1-amino-2-propanol, 2-amino-2-ethyl-1,3-propanediol, 2-amino-2-hydroxymethyl-1,3-propanediol, 1,3-diamino-2-propanol, 1-amino-2-butanol, and 2-aminoethanol.

The addition amount of the amine compound to be used for the reaction is not particularly limited, but from the viewpoint of promoting the generation of $Cu_{64}O$ and $Cu_8O$, the molar ratio of the amine compound to the copper contained in the copper oxide-coated copper raw material particles is preferably 0.1 times or more, and may be 5 times or more. The molar ratio may be, for example, 20 times or less.

(Solvent)

The solvent is not particularly limited, and for example, polyhydric alcohols such as ethylene glycol, lower alcohols such as methanol, ethanol, and 2-propanol, ketones such as acetone, and water can be used.

(Reducing agent)

The reducing agent is not particularly limited, and for example, hydrazine-based reducing agents such as hydrazine, hydrazine hydrochloride, hydrazine sulfate, and hydrazine hydrate, citric acid, ascorbic acids, and borohydrides such as sodium borohydride can be used. The reducing agent may be added after the raw materials including the copper oxide-coated copper raw material particles, the complexing agent, the amine compound, and the solvent are added and mixed. After the addition of the reducing agent, it is just required to perform stirring until the formation of the desired slightly oxidized copper is confirmed. It is preferable to perform stirring until the reducing agent disappears thereby sufficiently performing the reaction.

(Cooling during reaction)

In the method for producing slightly oxidized copper-coated copper particles, for example, when hydrazine is used as the reducing agent, heat generation due to addition of the reducing agent, such as decomposition reaction of hydrazine, may occur, and the temperature of the reaction solution may rise. From the viewpoint of inhibiting the temperature rise of the reaction solution and inhibiting $Cu_{64}O$ and $Cu_8O$ once formed from being reduced into metallic copper, it is preferable to provide a temperature control means such as cooling the reaction solution such that the reaction proceeds at 50°C or lower. For example, it is preferable to add a reducing agent while a reaction vessel is held in a water bath.

(Atmosphere during reaction)

The atmosphere during the reaction is limited to an oxygen-containing atmosphere, such as air, and constant exposure to the oxygen-containing atmosphere is necessary during the reaction. The case of an inert gas atmosphere such as nitrogen gas or argon gas, or the case of sealing the reaction vessel even in air is unfavorable because the oxide formation reaction into $Cu_{64}O$ or $Cu_8O$ does not proceed, and copper particles are formed.

(Other steps)

The method for producing slightly oxidized copper-coated copper particles may further include steps other than the steps described above. For example, a purification step, a drying step, and the like may be included. In the purification step, it is preferable to perform the purification with a washing solvent. The washing solvent is not particularly limited, and for example, an organic solvent such as N,N-dimethylacetamide, toluene, or hexane can be used.

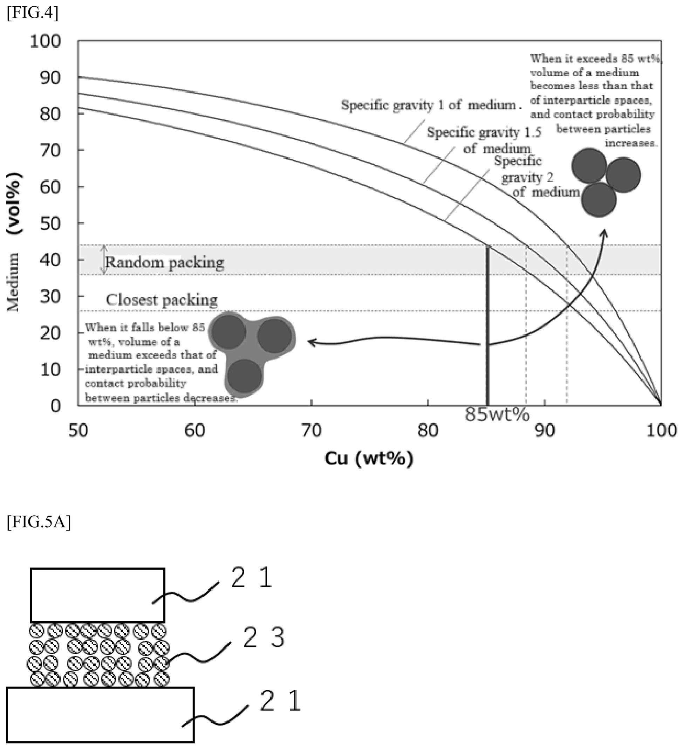

The proportion of the slightly oxidized copper-coated copper particles accounting for in the sheet-like bonding material is more than 85% by mass. The reason why the proportion of the slightly oxidized copper-coated copper particles accounting for in the sheet-like bonding material has been determined will be described below. When the sheet-like bonding material is composed of, for example, copper particles and a medium, the relationship between the content (% by mass) of the copper particles and the volume (% by volume) of the medium is as shown in Fig. 4. As the medium, a liquid or a solid such as resin is assumed, and the specific gravity range thereof is approximately 0.8 to 2. Since the volume of the medium varies depending on the specific gravity, in Fig. 4, the relationship between the content (% by mass) of the copper particles and the volume (% by volume) of the medium is plotted for three cases where the specific gravity of the medium is 1.0, 1.5, and 2.0 as representative examples. From Fig. 4, when the content of the copper particles is 85% by mass, the volume of the medium is 44% by volume when the specific gravity is 2.0, 51% by volume when the specific gravity is 1.5, and 61% by volume when the specific gravity is 1.0. On the other hand, the interparticle spaces of the core copper particles are 26% by volume even in the case of closest packing, and are 35.9 to 44% by volume in the case of random packing. As described above, in the case of using the medium having a specific gravity of 2.0, which is the lowest in medium volume, when the copper content is 85% by mass or less, the volume of the medium exceeds the volume of the interparticle spaces, and the contact probability between particles decreases. In order for the copper fine particles to be sintered, it is necessary for the particles to be in contact with each other, but as described above, when the contact probability between particles is low, the possibility that sintering is inhibited increases. Furthermore, if a medium is charged more than the interparticle spaces, when the medium is removed by volatilization or thermal decomposition, then voids tend to be formed and remain, and the strength of the sintered structure is reduced. In addition, in a case where the medium is a liquid, when being not more than 85% by mass at which the interparticle spaces are filled with the medium, a viscoelastic behavior is exhibited, and thus it is difficult to process the material into a sheet. Therefore, the proportion of the slightly oxidized copper-coated copper particles accounting for in the sheet-like bonding material has been set to more than 85% by mass.

The proportion of the slightly oxidized copper-coated copper particles accounting for in the sheet-like bonding material is preferably 90% by mass or more. The proportion of the slightly oxidized copper-coated copper particles accounting for in the sheet-like bonding material is preferably as high as possible from the viewpoint of increasing the adhesion strength, but the proportion may be, for example, 98% by mass or less.

[Medium]

The sheet-like bonding material of the present embodiment includes a medium in addition to the slightly oxidized copper-coated copper particles. The medium may be either liquid or solid. The liquid medium may be derived from the dispersion medium, the solvent, or the like used in the production of the sheet-like bonding material. Examples of the solid medium include a resin binder. Known materials can be used as the liquid medium and the solid medium. Examples of the liquid medium include one or more among amines including 2-(dimethylamino)ethanol, N-butyldiethanolamine, N-methyldiethanolamine, N-ethyldiethanolamine, diethanolamine, triethanolamine, 1-[bis(2-hydroxyethyl)amino]-2-propanol, and ethylenediamine-N,N,N',N'-tetraethanol; glycols including one or more of ethylene glycol, diethylene glycol, triethylene glycol, tetraethylene glycol, hexaethylene glycol, polyethylene glycol, propylene glycol, dipropylene glycol, tripropylene glycol, tetrapropylene glycol, and polypropylene glycol (diol type, triol type); and glycerol.

[Other ingredients]

The sheet-like bonding material of the present embodiment may include pure copper particles or a metal atom composite such as a copper cluster in addition to the slightly oxidized copper-coated copper particles and the medium as long as the effects of the present embodiment are not impaired. In addition, the sheet-like bonding material of the present embodiment may include an additive such as a dispersant as necessary as long as the effects of the present embodiment are not impaired. Known materials can be used as the additives.

The total proportion of the medium and other ingredients accounting for in the sheet-like bonding material is 15% by mass or less, preferably 10% by mass or less, and more preferably 5% by mass or less.

The thickness of the sheet-like bonding material according to the present embodiment may be appropriately set according to a desired bonded body. The thickness is preferably 1 $\mu$m or more and 1 mm or less. For example, a copper foil for semiconductors has a surface roughness of about 1 to 3 $\mu$m, and to obtain a bonded body with high strength integrated with a substrate, the bonding sheet needs to have a thickness large enough for absorbing the irregularities. Therefore, the thickness is preferably 1 $\mu$m or more. On the other hand, for example, the thickness is preferably 1 mm or less from the viewpoint of securing the structural strength of a power semiconductor and enhancing reliability, and the viewpoint of suppressing defects such as extrusion to the outside of the bonding portion at the time of bonding by pressurization. The thickness may be 0.5 mm or less, 0.3 mm or less, 0.10 mm or less, 0.050 mm or less, or 0.020 mm or less.

[Method for producing sheet-like bonding material]

The method for producing the sheet-like bonding material is not limited, and for example, the sheet-like bonding material can be produced by the following method. The method may include subjecting the slurry obtained in the purification step in the production of slightly oxidized copper-coated copper particle, the slurry containing a washing solvent (for example, N,N-dimethylacetamide, toluene, or hexane) and copper oxide-coated copper fine particles to solvent replacement with an alcohol solvent such as ethanol, subjecting the resulting slurry to centrifugal separation to remove the alcohol solvent as the supernatant, and obtaining a wet cake of the slightly oxidized copper-coated copper particles. The replacement with an alcohol solvent is not necessarily required, but in particular, since a slurry including a nonpolar solvent such as toluene and hexane is not dissolved in many dispersion media described in detail in the following section, it is important to add a dispersion medium after replacement with an alcohol as a dissolution aid in order to obtain a mixture having high dispersibility.

Thereafter, one or more among amines including 2-(dimethylamino)ethanol, N-butyldiethanolamine, N-methyldiethanolamine, N-ethyldiethanolamine, diethanolamine, triethanolamine, 1-[bis(2-hydroxyethyl)amino]-2-propanol, triethanolamine, and ethylenediamine-N,N,N',N'-tetraethanol; glycols including one or more of ethylene glycol, diethylene glycol, triethylene glycol, tetraethylene glycol, hexaethylene glycol, polyethylene glycol, propylene glycol, dipropylene glycol, tripropylene glycol, tetrapropylene glycol, and polypropylene glycol (diol type, triol type); and glycerol are added as dispersion media, and then a stirring and dispersion treatment is performed to afford a paste. The stirring and dispersion treatment can be performed using a disperser. Examples of the disperser include a twin-screw kneader, a three-roll mill, a planetary mixer, a rotation and revolution type stirrer, an ultra-high pressure disperser, a thin-film spin system high-speed mixer, a ball mill, and a bead mill. Then, the resulting paste may be held in normal temperature vacuum until the mass no longer changes to remove the alcohol solvent, affording a powdery mixture of slightly oxidized copper-coated copper particles and a medium derived from the dispersion medium, in which the proportion of the slightly oxidized copper-coated copper particles is more than 85% by mass.

The powdery mixture is thoroughly kneaded to afford a slightly sticky powder. Examples of the kneading machine include a single-screw or twin-screw continuous kneading machine, a batch-type kneading machine using a roll mill, a mortar, an automatic mortar, and a Hoover Muller. Subsequently, the powder may be molded by cold rolling. For example, a sheet-like bonding material having a desired thickness can be obtained by sandwiching the powder between PTFE sheets, preliminarily rolled with a rolling pin, and then press-molded. Furthermore, a thinner sheet-like bonding material having a desired thickness, for example, a thickness of about 0.05 to 0.4 mm can be obtained by, as necessary, sandwiching the molded body obtained through the press molding described above between stainless steel thin plates, followed by rolling stepwise with a roll press.

As described above, after the thickness of the sheet-like bonding material is adjusted to a desired thickness, punching may be performed into a desired size and shape using a cutting die, a punch, or the like, as necessary.

[Method for producing bonded body]

The present embodiment also includes a method for producing a bonded body using the sheet-like bonding material described above.

The method for producing a bonded body includes:

disposing the sheet-like bonding material described above between a first member and a second member to obtain a laminate; and
heating the laminate at 100 to 500°C to bond the first member and the second member with a sintered product of the sheet-like bonding material interposed therebetween. When the sheet-like bonding material of the present embodiment is used, it is just required to dispose the sheet-like bonding material between the first member and the second member when performing bonding, and it is not necessary to perform a coating treatment such as printing or spraying on the surfaces of the members, and bonding can be easily performed. Hereinafter, the method for producing a bonded body will be described step by step.

(Formation of laminate)

The sheet-like bonding material is disposed between the first member and the second member to afford a laminate. Materials, shapes, and the like of the first member and the second member to constitute the laminate are not limited, and may be determined according to the desired bonded body. At least one of the first member and the second member may be a semiconductor element such as an IGBT, a diode, a power MOSFET, a power switch, a MOS-FET, a thyristor, a logic, a sensor, an analog integrated circuit, an LED, a semiconductor laser, a rectifier, or a transmitter, or may be a member other than a semiconductor element such as a substrate for semiconductor element mounting such as a lead frame, a metal plate-attached ceramic substrate (for example, DBC), and an LED package, a power supply member such as a copper ribbon, a metal block, or a terminal, a heat dissipation plate, a water cooling plate, or the like. At least one of the first member and the second member may be a semiconductor chip including the semiconductor element. At least one of the first member and the second member is preferably a semiconductor element. For example, the laminate can be formed by sandwiching the sheet-like bonding material of the present embodiment between a substrate and a semiconductor chip as the first member and the second member. On a surface on which the sheet-like bonding material is to be formed of one or more of the first member and the second member, a metal layer such as metal plating may be formed as long as desired characteristics are not impaired. Examples of the metal element to constitute the metal layer include nickel, palladium, copper, silver, gold, platinum, lead, tin, cobalt, zinc, manganese, aluminum, titanium, chromium, iron, and molybdenum.

(Formation of bonded body by heating of laminate)

The laminate is heated at a heating temperature of 100 to 500°C. When the sheet-like bonding material of the present embodiment is used, sintering can be performed at a low temperature, and therefore heating to 100°C or higher is sufficient. The heating temperature is preferably 150°C or higher. On the other hand, the heating temperature is preferably 500°C or lower from the viewpoint of the heat-resistant temperature of the members to constitute an electronic component, and the like. The holding time at the heating temperature may be appropriately determined from the viewpoint of obtaining a sintered product according to the size of the target bonded body, the amount of the sheet-like bonding material used, and the like. The holding time at the heating temperature may be, for example, 1 minute or more and 60 minutes or less. When the sheet-like bonding material of the present embodiment is used, sintering can be promoted, and therefore the holding time can be set to 30 minutes or less, and further 20 minutes or less.

The heating may be performed while pressurizing the laminate or may be performed without pressurizing the laminate. By pressurizing the laminate, it is possible to inhibit growth of bubbles or cracking due to thermal expansion of gaps in the laminate. In addition, it is possible to produce a bonded body having high adhesion strength in a short time by performing the pressurization and heating treatment. When the laminate is heated while being pressurized, it is preferable to heat the laminate with a load of 40 kPa or more applied. The reason why the load is preferably set to 40 kPa or more will be described below.

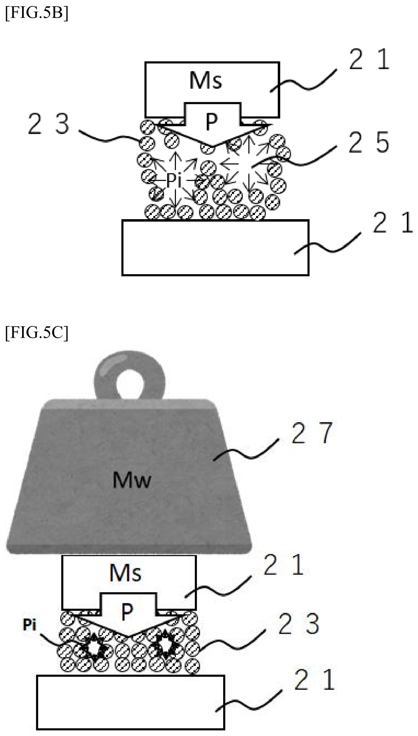

As described above, since the sheet is composed of slightly oxidized copper-coated copper particles and a medium, and the lower limit value of the copper content is 85% by mass, interparticle spaces can exist. At the time of bonding, the bonding sheet is sandwiched between substrates, and is in a state close to a hermetically sealed system. Assuming that the sintered layer is a hermetically sealed system and the temperature instantaneously reaches 200°C from 20°C, the internal pressure is (473 K/293 K) × the atmospheric pressure = 164 kPa (absolute pressure) according to the Boyle-Charles' law. Since the atmospheric pressure is about 100 kPa, an internal pressure of 64 kPa can be generated in calculation. In addition, an increase in internal pressure due to volatilization or thermal decomposition of the medium is also conceivable. On the other hand, the pressure generated in the downward direction according to the weight of a substrate is as extremely small as 0.4 kPa in the embodiment of Example. Therefore, while the state before heating is Fig. 5A, for example, when the internal pressure is increased due to rapid heating, the substrate 21 is lifted and voids 25 are generated as illustrated in Fig. 5B. The generation of the voids 25 is not preferable because it lowers the strength of a sintered structure. Therefore, as shown in Fig. 5C, it is necessary to, during calcination, apply a pressure 27 (in Fig. 5C, an image of pressurization is expressed by a weight for the purpose of explanation, and the pressurization method may be a method that is usually used as described later) higher than the increase in internal pressure generated during calcination. In an actual system, the temperature raising rate is slower than the previous assumed condition, and gas also escapes from the side surfaces of the sheet. Therefore, the generated internal pressure is smaller than the calculated value, and it is not necessary to apply a load as large as 64 kPa. However, from experimental findings with a separately confirmed bonding paste, it has been confirmed that it is preferable to apply a pressure of about 40 kPa to obtain a sintered compact in which the occurrence of voids is sufficiently suppressed, more preferably a sintered compact free of voids. Therefore, as described above, the preferable load has been set to 40 kPa or more.

The load is more preferably 1 MPa or more from the viewpoint of more closely bonding the particles, and further preferably 10 MPa or more from the viewpoint of sintering in a shorter time. Examples of the pressurization and heating treatment include heating with a heating device such as a heater heating device, an infrared heating furnace, an electromagnetic heating device, a hot plate, or a hot air heating furnace after placing the laminate in a pressurized state using a hot press or a jig.

The atmosphere in the production of the bonded body including the heating is preferably an inert atmosphere such as nitrogen or argon from the viewpoint of prevention of oxidation, and is preferably a nitrogen atmosphere from the viewpoint of cost. However, the atmosphere is not limited thereto, and the process may be performed in the air depending on heating conditions such as a low temperature and a short time.

The method for producing the bonded body is just required to include the step of forming the laminate and the step of heating the laminate to bond the members together, and other steps are not limited. Examples of other steps include a preparation step of processing the first member, the second member, and the sheet-like bonding material into desired sizes, performing washing, and the like for the purpose of forming the laminate.

The method for producing the bonded body of the present embodiment can be applied to a method for producing a semiconductor device. That is, at least one of the first member and the second member may be a semiconductor element, and the bonded body may be a semiconductor device.

[Bonded body]

The present embodiment also includes a bonded body including a first member, a second member, and a sintered product of a sheet-like bonding material, the sintered product bonding the first member and the second member. The first member and the second member in the bonded body are as described above. The sheet-like bonding material which is a precursor of the sintered product is as described above. The sintered product of the sheet-like bonding material refers to a sintered product obtained by heating the sheet-like bonding material under the above-described conditions, for example. The bonded body of the present embodiment may be in an aspect in which the first member, the sintered product of the sheet-like bonding material, and the second member are bonded in this order, that is, the first member and the sintered product of the sheet-like bonding material are in direct contact with each other and the first member and the sintered product of the sheet-like bonding material are in direct contact with each other, or a metal layer, such as metal plating formed on the surface of a member, may be interposed in at least one of between the first member and the sintered product of the sheet-like bonding material and between the second member and the sintered product of the sheet-like bonding material as long as desired characteristics are not impaired. Examples of the metal constituting the metal layer include the metal elements described above.

The bonded body according to the present embodiment can achieve a high adhesion strength of 30 MPa or more, further 50 MPa or more, and further 70 MPa or more when the adhesion strength is measured by the method described in Examples described later.

One example of the bonded body of the present embodiment is a semiconductor device in which at least one of the first member and the second member is a semiconductor element. Specific examples of the semiconductor element include those described above.

Examples

In the following, the present invention will be described more specifically with reference to Examples. The present invention is not limited by the following Examples, and can be implemented with appropriate modifications within the scope that can be consistent with the above-described and later-described gist, and all of them are included in the technical scope of the present invention.

[Synthesis of core-shell fine particles (slightly oxidized copper-coated copper particles)]

1388 g (22.4 mol) of ethylene glycol (manufactured by Kanto Chemical Co., Inc.) as a solvent, 1182 g (15.7 mol) of 1-amino-2-propanol (manufactured by Kanto Chemical Co., Inc.) as a protective agent, and 473 g (7.9 mol) of acetic acid (manufactured by Junsei Chemical Co., Ltd.) as a complexing agent were placed in a reaction vessel, sufficiently stirred, and then 100 g (1.6 mol) of copper particles (TN-Cu100 manufactured by Taiyo Nippon Sanso Corporation, particle size: 50 to 200 nm) as a starting material were added. The commercially available copper particles as a starting material are copper oxide-coated copper raw material particles having a $Cu_2O$ layer. While the reaction vessel was held in a water bath, 788 g (15.7 mol) of hydrazine monohydrate (manufactured by Kanto Chemical Co., Inc.) was added as a reducing agent, and the mixture was allowed to react while being stirred at 1100 rpm. The reaction was carried out in air. After the reaction, purification by multiple centrifugations using N,N-dimethylacetamide, toluene, and hexane was performed, affording a slurry containing a product. The mass of the slightly oxidized copper-coated copper particles in the slurry was calculated by the following formula (1).

[Expression 1]

$$Y = \frac{M_S - \rho_m \times V_S}{1 - \dfrac{\rho_m}{\rho_{Cu}}} \quad \cdots (1)$$

In the formula (1),

Y: Mass (g) of particles in slurry

$M_s$: Slurry mass (g)

$V_s$: Slurry volume (cm$^3$)

$\rho_m$: Solvent density (g/cm$^3$)

$\rho_{Cu}$: Copper density (g/cm$^3$).

(Electron microscope observation of core-shell particles)

The obtained product was observed with an electron microscope. In the electron microscope observation, a SEM image was obtained with a scanning electron microscope (SEM, JSM-6701F manufactured by JEOL Ltd., acceleration voltage: 15 kV), a TEM image was obtained with a transmission electron microscope (TEM, JEM-2000FX manufactured by JEOL Ltd., acceleration voltage: 200 kV), and a STEM image was obtained with a scanning transmission electron microscope (STEM, JEM-ARM200F, acceleration voltage: 200 kV). The observations with TEM and STEM were performed in a state where fine particles were dispersed so as not to be aggregated.

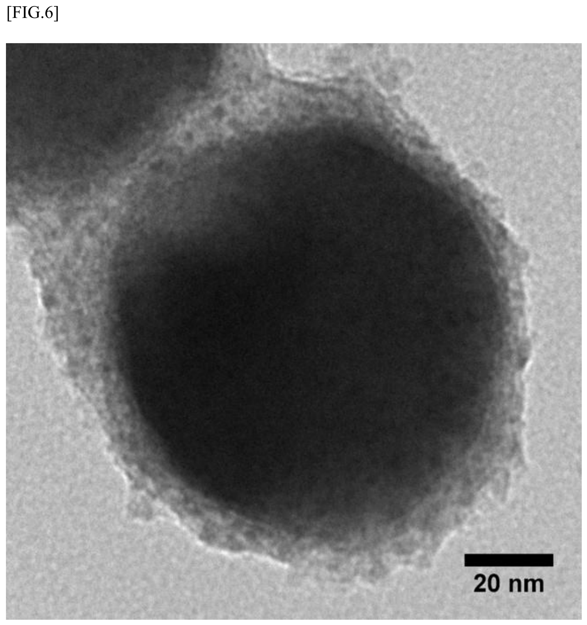

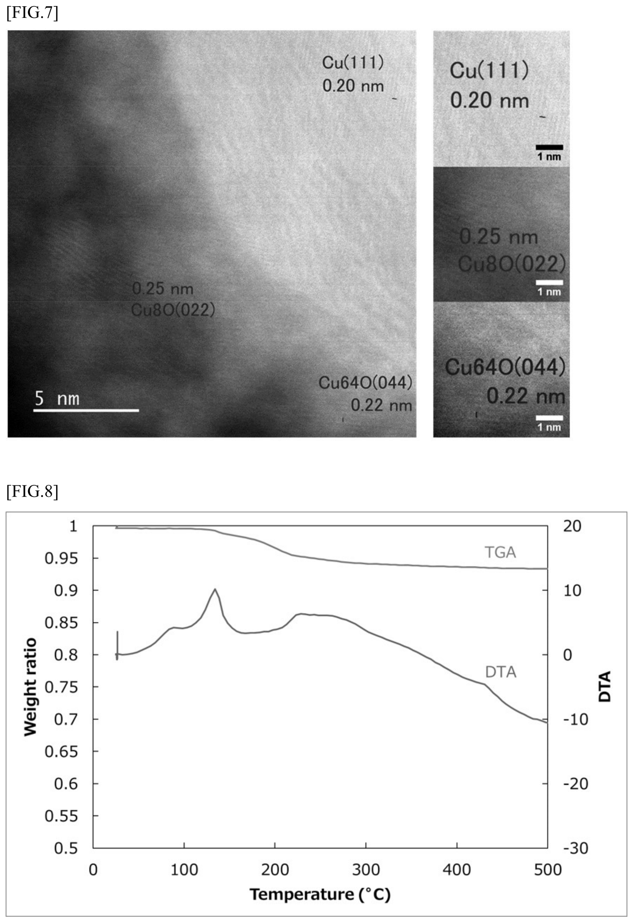

As a result of the electron microscope observation, the TEM image of the obtained particles is shown in Fig. 6. Further, STEM images of a particle obtained are shown in Fig. 7. The TEM image of Fig. 6 shows that the generated particles had a core-shell form, and it has been confirmed from the lattice spacings observed in the STEM images of Fig. 7 that the generated particles were core-shell slightly oxidized copper-containing particles in which the core portion was copper, and the surface of the core was covered in a shell form with nanoparticles containing $Cu_{64}O$ and $Cu_8O$ with a particle size of about 3 nm.

According to the fine particles having the configurations described above, fine particles in which slightly oxidized copper nanoparticles are developed on the surfaces of submicron copper particles, which cannot be obtained by conventional mixing methods, can be easily obtained. In the core-shell slightly oxidized copper-containing particles, shells composed of nanoparticles of $Cu_{64}O$ and $Cu_8O$, which are to be reduced to metallic copper by heating, densely connect adjacent copper fine particle cores, and thus sintering between the core particles is dramatically promoted. The resulting sintered product has a structure in which copper fine particle cores having high crystallinity are densely connected, and is expected to have high mechanical strength.

[Preparation of powdery mixture of slightly oxidized copper-coated copper particles and dispersion medium]

The dispersion medium of the slurry containing the synthesized slightly oxidized copper-coated copper particles was replaced from hexane to ethanol by centrifugation. The resulting mixture was further centrifuged to remove the supernatant ethanol, thereby affording a wet cake of slightly oxidized copper-coated copper particles. 7.5 parts by mass of triethanolamine (manufactured by FUJIFILM Wako Pure Chemical Corporation) was added as a dispersion medium to 92.5 parts by mass (a value calculated by the formula (1)) of the slightly oxidized copper-coated copper particles in the wet cake. After the addition, the mixture was stirred for 4 minutes using a rotation and revolution mixer (AR-100 manufactured by THINKY Corporation), and then intermittently subjected to a dispersion treatment for 3 minutes using a thin-film spin system high-speed mixer (FILMIX 56-L manufactured by PRIMIX Corporation), obtaining a paste after the dispersion treatment. Thereafter, ethanol was removed by holding the mixture in normal temperature vacuum until the mass no longer changed, whereby a powdery mixture of slightly oxidized copper-coated copper particles and a medium derived from the dispersion medium was obtained.

(TG-DTA measurement of powdery mixture of slightly oxidized copper-coated copper particles and dispersion medium)

The powdery mixture obtained was subjected to thermogravimetric/differential thermal analysis (TG-DTA) at a temperature raising rate of 5°C/min under a 3% hydrogen/nitrogen mixed gas using a TG/DTA simultaneous measuring instrument manufactured by Shimadzu Corporation. The TG-DTA curves are shown in Fig. 8 as an analysis result. From Fig. 8, it has been confirmed from the mass reduction indicated by TGA that the resulting mixture contained 93.8% by mass of slightly oxidized copper-coated copper particles.

[Preparation of sheet-like bonding material]

As a pre-treatment, the powdery mixture was thoroughly kneaded with a mortar, affording a slightly sticky powder. The powder was spread on a PTFE sheet (manufactured by Nitto Denko Corporation, thickness: 0.1 mm) in a several centimeters square, sandwiched by another PTFE sheet from above, and extended into a sheet shape with a round metal bar on a smooth table. This was press-molded, affording a uniform sheet-like bonding material A having a thickness of about 0.3 mm. Further, the sheet-like bonding material A was sandwiched between stainless thin plates (thickness: 0.1 mm) and rolled stepwise with a roll press, affording a sheet-like bonding material B having a thickness of about 0.15 mm. The content of the slightly oxidized copper-coated copper particles contained in these sheet-like bonding materials was substantially the same as that of the above mixture, and was 93.8% by mass.

[Evaluation of bonding calcination]

Two copper test pieces were bonded together using the resulting sheet-like bonding material, then a sample for evaluation of bonding calcination bonded through calcination of the sheet-like bonding material was prepared, and then adhesion strength was measured.

(Preparation of sample for evaluation of bonding calcination)

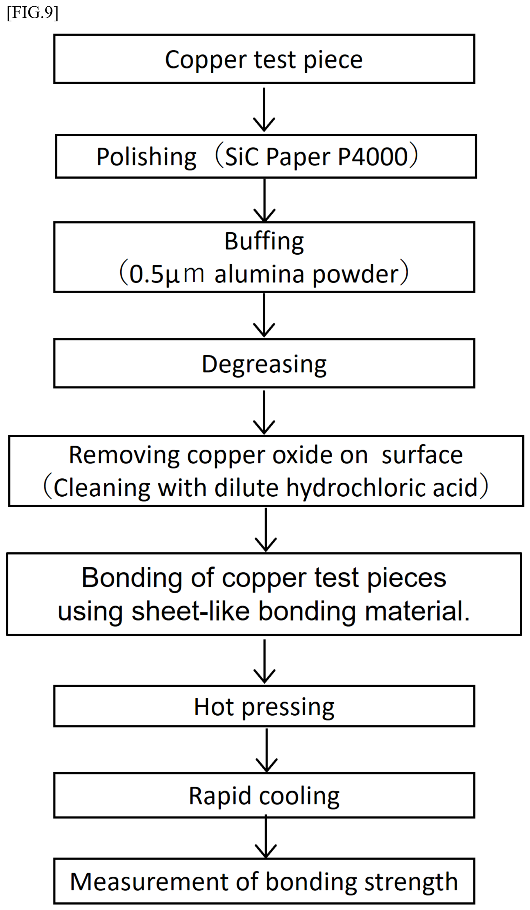

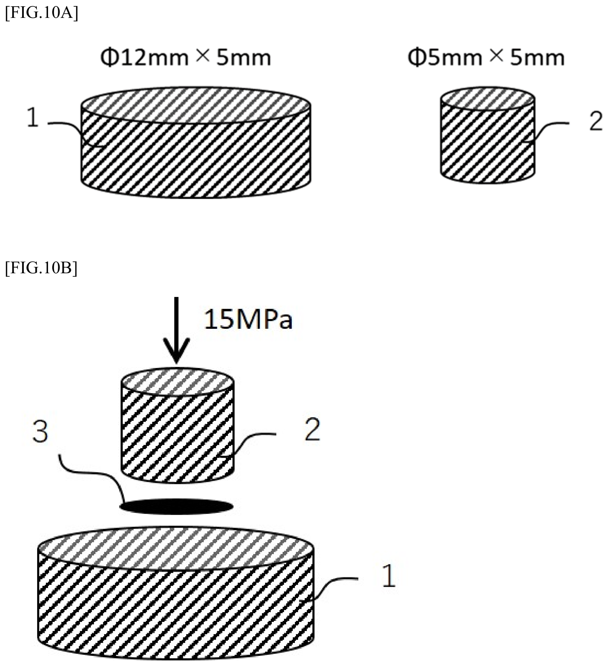

The procedure for preparing the sample for evaluation of bonding calcination is as shown in Fig. 9. First, a copper test piece 1 having a diameter of 12 mm and a copper test piece 2 having a diameter of 5 mm were cut as circular copper test pieces out of an oxygen-free copper plate (C1020P) having a thickness of 5 mm as illustrated in Fig. 10A. The surface of each of the copper test pieces was polished with a waterproof grinding and polishing paper (SiC Paper) P4000, then mirror-finished with a polishing cloth soaked with a suspension of 0.5 $\mu$m alumina powder, and then degreased, whereby the copper test pieces were finished. Immediately before bonding the sheet-like bonding materials, each copper test piece was immersed in 2.5M hydrochloric acid to remove a copper oxide film on the surface, sufficiently washed with pure water and methanol, and then dried.

The sheet 3 having a diameter of 6 mm cut out by a punch of each of the sheet-like bonding material A and the sheet-like bonding material B was sandwiched between the copper test piece 1 having a diameter of 12 mm and the copper test piece 2 having a diameter of 5 mm and the copper test pieces were bonded together as illustrated in Fig. 10B. Then, with a load of 15 MPa applied in the direction arrowed in Fig. 10B by a hot press to the two copper test pieces bonded together, the temperature of the copper test pieces was raised at a high speed of 90°C/min to an ultimate temperature (three levels of 150°C, 200°C, and 250°C), and then held at the ultimate temperature for 15 minutes. Then, the copper test pieces were taken out of the hot press, and rapidly cooled to normal temperature, affording a sample for evaluation of bonding calcination in which the copper test pieces were bonded by a sintered product of the sheet-like bonding material.

(Bonding calcination evaluation test (measurement of adhesion strength))

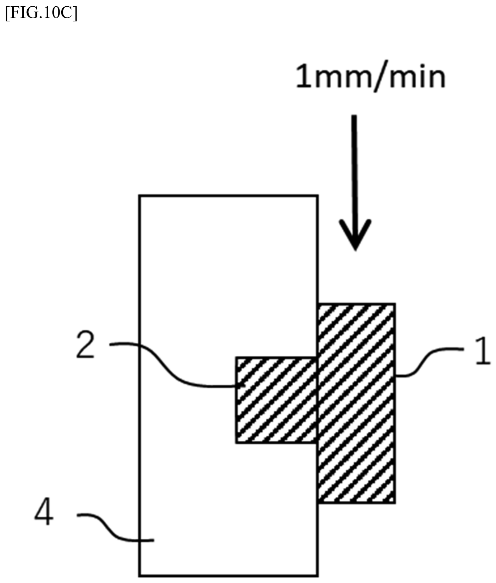

The adhesion strength of the sample for evaluation of bonding calcination was evaluated using a 5kN material tester (manufactured by Shimadzu Corporation). Specifically, as shown in a schematic sectional view in Fig. 10C, a load was applied to the test piece in parallel with the coated surface of the test piece at a speed of 1 mm/min, and the breaking load of the copper test piece was measured as the adhesion strength.

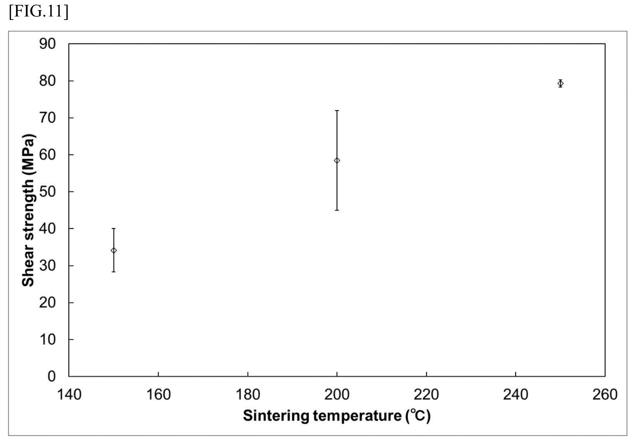

As a result of the above measurement, the relationship between the calcining temperature (ultimate temperature, "sintering temperature" in Fig. 11) and the adhesion strength ("shear strength" in Fig. 11) in the case of using the sheet-like bonding material A is shown in Fig. 11. The average adhesion strength of the sheet-like bonding material A having a thickness of 0.3 mm calculated from two measurements was as high as 34 MPa, 59 MPa, and 79 MPa at calcining temperatures of 150°C, 200°C, and 250°C, respectively. In addition, it was separately confirmed that also in the case of the sheet-like bonding material B having a small thickness of 0.15 mm, sufficiently high adhesion strength represented by an average value of 56 MPa calculated from two measurements was obtained at a calcining temperature of 200°C.

From the above results, according to the present embodiment, a high-concentration copper bonding material that will form few voids or cracks associated with volatilization of the dispersion medium is easily obtained, whereby shells composed of nanoparticles of $Cu_{64}O$ and $Cu_8O$ densely sinter and connect adjacent copper fine particle cores at the time of heating to afford strong bonding as illustrated in Fig. 3, high adhesion strength is obtained, and the characteristics of core-shell slightly oxidized copper-containing particles can be utilized to the maximum. In the bonding step, the sheet-like bonding material of the present embodiment is cut out into a desired size using a cutting die, a punch, or the like and can bond, for example, a substrate and a semiconductor chip only through being hot pressed with the cut sheet-like bonding material sandwiched between the substrate and the semiconductor chip. Therefore, the process is extremely simplified, and the sheet-like bonding material greatly contributes to man-hour reduction.

[Evaluation of conductivity]

(Preparation of sample for evaluation of conductivity)

An alumina plate (AO-5050 manufactured by Furuuchi Chemical Corporation) having a thickness of 1 mm was cut out into a size of 5 cm × 2.5 cm, affording an alumina substrate to be used for evaluation. The sheet-like bonding material A cut into a 2 cm square was placed on a surface of the alumina substrate, and sufficiently attached to the alumina substrate. The resultant was placed in a tubular furnace, a 3% hydrogen/nitrogen mixed gas was supplied into the tube at a flow rate of 1 L/min, and gas replacement was performed at normal temperature for 30 minutes or more. Thereafter, while nitrogen gas was supplied into the tube at a flow rate of 1 L/min, the temperature was raised to 200°C in about 20 minutes, held at 200°C for 1 hour, and then naturally cooled to normal temperature, affording a substrate on which a sintered product of the sheet-like bonding material had been formed. The series of operations from the placing of the sheet-like bonding material A to the natural cooling to normal temperature while holding the evaluation temperature was performed in a nitrogen atmosphere.

(Measurement of volume resistivity)

For the purpose of evaluating the conductivity of a sintered product, the volume resistivity was determined by averaging six measurements using a resistivity meter (Loresta-GP, ASP probe manufactured by Mitsubishi Chemical Analytech Co., Ltd.). In the measurement of the volume resistivity, a value calculated by Loresta-GP was used as the resistivity correction factor RCF for correcting the shape factor of the coating film, and the film thickness of the sintered product was calculated from an image obtained by observing a section obtained by breaking the substrate on which the sintered product had been formed, with a microscope (digital microscope VHX-7000 manufactured by KEYENCE Corporation). As a result of the measurement, the volume resistivity of the calcined product was $4 \times 10^{-6}$ $\Omega$cm. This value was about 2.5 times the resistivity of bulk copper at 0°C ($1.55 \times 10^{-6}$ $\Omega$cm), and was an extremely good value.

From the above results, it has been confirmed that the sheet-like bonding material of the present invention can also be used as a conductive sheet, and exhibits extremely high conductive properties. Since in the slightly oxidized copper-coated copper particles contained in the sheet-like bonding material of the present embodiment, the core portion is metallic copper, and the content of copper oxide capable of increasing resistance such as CuO and $Cu_2O$ is controlled, it is considered that the sintered product (bonded portion) obtained by sintering the slightly oxidized copper-coated copper particles exhibits high electrical conductivity and does not inhibit the characteristics of an electronic component and an electronic devices as a bonded body.

The present embodiment may include the following aspects.

Aspect 1 of the present invention is
a sheet-like bonding material comprising:

slightly oxidized copper-coated copper particles each including a copper particle as a core and a shell containing slightly oxidized copper composed of one or more of $Cu_{64}O$ and $Cu_8O$; and
a medium,
wherein a content of the slightly oxidized copper-coated copper particles is more than 85% by mass.

Aspect 2 of the present invention is
the sheet-like bonding material according to Aspect 1, wherein the slightly oxidized copper composed of one or more of $Cu_{64}O$ and $Cu_8O$ is in the form of slightly oxidized copper particles having an average particle diameter of 1 nm or more and 20 nm or less.

Aspect 3 of the present invention is
the sheet-like bonding material according to Aspect 1 or 2, wherein the copper particles as cores have an average particle diameter of 20 nm or more and 2 $\mu$m or less.

Aspect 4 of the present invention is
the sheet-like bonding material according to any one of Aspects 1 to 3, wherein the sheet-like bonding material has a thickness of 1 $\mu$m or more and 1 mm or less.

Aspect 5 of the present invention is
a method for producing a bonded body, comprising:

disposing the sheet-like bonding material according to any one of Aspects 1 to 4 between a first member and a second member to obtain a laminate; and
heating the laminate at 100 to 500°C to bond the first member and the second member with a sintered product of the sheet-like bonding material interposed therebetween.

Aspect 6 of the present invention is
the method for producing a bonded body according to Aspect 5, wherein the laminate is heated under a pressure of 40 kPa or more.

Aspect 7 of the present invention is
the method for producing a bonded body according to Aspect 5 or 6, wherein at least one of the first member and the second member is a semiconductor element, and the bonded body is a semiconductor device.

Aspect 8 of the present invention is

a bonded body comprising: a first member; a second member; and a sintered product of the sheet-like bonding material according to any one of Aspects 1 to 4, the sintered product bonding the first member and the second member.

Aspect 9 of the present invention is

the bonded body according to Aspect 8, wherein at least one of the first member and the second member is a semiconductor element, and the bonded body is a semiconductor device.

This application claims priority based on Japanese Patent Application No. 2023-063000. Japanese Patent Application No. 2023-063000 is incorporated herein by reference.

INDUSTRIAL APPLICABILITY

The sheet-like bonding material according to the present embodiment is suitably used, for example, for the production of an electronic component accompanied by bonding of members that constitute the electronic component. For example, it is suitably used for the production of a semiconductor device for which high adhesion strength between members is required, such as a SiC power semiconductor.

REFERENCE SIGNS LIST

| | |
|---|---|
| 1, 2 | Copper test piece |
| 3 | Sheet-like bonding material |
| 4 | Fixing jig of testing machine |
| 11 | Core copper particle |
| 13 | Oxide film |
| 15A | Conventional sintered compact |
| 15B | Sintered compact according to the present embodiment |
| 17 | Nanoparticle |
| 21 | Substrate |
| 23 | Slightly oxidized copper-coated copper particle |
| 25 | Void |
| 27 | Pressurization |

**Claims**

1. A sheet-like bonding material comprising:

   slightly oxidized copper-coated copper particles each including a copper particle as a core and a shell containing slightly oxidized copper composed of one or more of $Cu_{64}O$ and $Cu_8O$, wherein the slightly oxidized copper composed of one or more of $Cu_{64}O$ and $Cu_8O$ is in the form of slightly oxidized copper particles having an average particle diameter of 1 nm or more and 20 nm or less; and
   a medium,
   wherein a content of the slightly oxidized copper-coated copper particles is more than 85% by mass.

2. The sheet-like bonding material according to claim 1, wherein the copper particles as cores have an average particle diameter of 20 nm or more and less than 2 $\mu$m.

3. The sheet-like bonding material according to claim 1, wherein the sheet-like bonding material has a thickness of 1 $\mu$m or more and 1 mm or less.

4. A method for producing a bonded body, comprising:

   disposing the sheet-like bonding material according to any one of claims 1 to 3 between a first member and a second member to obtain a laminate; and
   heating the laminate at 100 to 500°C to bond the first member and the second member with a sintered product of the sheet-like bonding material interposed therebetween.

**5.** The method for producing a bonded body according to claim 4, wherein the laminate is heated under a pressure of 40 kPa or more.

**6.** The method for producing a bonded body according to claim 4, wherein at least one of the first member and the second member is a semiconductor element, and the bonded body is a semiconductor device.

**7.** A bonded body comprising: a first member; a second member; and a sintered product of the sheet-like bonding material according to any one of claims 1 to 3, the sintered product bonding the first member and the second member.

**8.** The bonded body according to claim 7, wherein at least one of the first member and the second member is a semiconductor element, and the bonded body is a semiconductor device.

EP 4 692 264 A1

[FIG.1]

18

[FIG.2]

[FIG.3]

[FIG.4]

[FIG.5A]

[FIG.5B]

[FIG.5C]

[FIG.6]

[FIG.7]

[FIG.8]

[FIG.9]

```
┌─────────────────────────────────────┐
│         Copper test piece            │
└─────────────────────────────────────┘
                  ↓
┌─────────────────────────────────────┐
│    Polishing（SiC Paper P4000）      │
└─────────────────────────────────────┘
                  ↓
┌─────────────────────────────────────┐
│              Buffing                 │
│   （0.5μm alumina powder）           │
└─────────────────────────────────────┘
                  ↓
┌─────────────────────────────────────┐
│             Degreasing               │
└─────────────────────────────────────┘
                  ↓
┌─────────────────────────────────────┐
│  Removing copper oxide on  surface   │
│（Cleaning with dilute hydrochloric acid）│
└─────────────────────────────────────┘
                  ↓
┌─────────────────────────────────────┐
│    Bonding of copper test pieces     │
│  using sheet-like bonding material.  │
└─────────────────────────────────────┘
                  ↓
┌─────────────────────────────────────┐
│            Hot pressing              │
└─────────────────────────────────────┘
                  ↓
┌─────────────────────────────────────┐
│            Rapid cooling             │
└─────────────────────────────────────┘
                  ↓
┌─────────────────────────────────────┐
│   Measurement of bonding strength    │
└─────────────────────────────────────┘
```

[FIG.10A]

[FIG.10B]

[FIG.10C]

[FIG.11]

## INTERNATIONAL SEARCH REPORT

| International application No. |
| --- |
| **PCT/JP2024/008575** |

### A. CLASSIFICATION OF SUBJECT MATTER

*C09J 1/00*(2006.01)i; *B22F 1/00*(2022.01)i; *B22F 1/05*(2022.01)i; *B22F 1/14*(2022.01)i; *B22F 7/08*(2006.01)i; *H01B 1/22*(2006.01)i
FI:   C09J1/00; B22F1/00 L; B22F7/08 C; B22F1/05; B22F1/14 600; H01B1/22 B

According to International Patent Classification (IPC) or to both national classification and IPC

### B. FIELDS SEARCHED

Minimum documentation searched (classification system followed by classification symbols)

C09J1/00; B22F1/00; B22F1/05; B22F1/14; B22F7/08; H01B1/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus (STN), JSTPlus/JST5874/JST7580/JSTChina (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| A | WO 2022/045252 A1 (NATIONAL UNIVERSITY CORPORATION HOKKAIDO UNIVERSITY) 03 March 2022 (2022-03-03)<br>claims, examples | 1-8 |
| A | WO 2019/106739 A1 (NATIONAL UNIVERSITY CORPORATION HOKKAIDO UNIVERSITY) 06 June 2019 (2019-06-06)<br>claims, examples | 1-8 |
| A | JP 2020-029392 A (NATIONAL UNIVERSITY CORPORATION HOKKAIDO UNIVERSITY) 27 February 2020 (2020-02-27)<br>claims, examples | 1-8 |
| A | JP 2020-200517 A (KANSAI UNIV.) 17 December 2020 (2020-12-17)<br>claims, examples | 1-8 |

☐ Further documents are listed in the continuation of Box C.   ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 May 2024** | **21 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

| International application No. |
|---|
| **PCT/JP2024/008575** |

| Patent document cited in search report | | | Publication date (day/month/year) | Patent family member(s) | | | Publication date (day/month/year) |
|---|---|---|---|---|---|---|---|
| WO | 2022/045252 | A1 | 03 March 2022 | US | 2023/0173578 | A1 | |
| | | | | claims, examples | | | |
| | | | | CN | 115461173 | A | |
| | | | | EP | 4205882 | A1 | |
| WO | 2019/106739 | A1 | 06 June 2019 | US | 2020/0376546 | A1 | |
| | | | | claims, examples | | | |
| | | | | CN | 111526952 | A | |
| | | | | EP | 3718661 | A1 | |
| JP | 2020-029392 | A | 27 February 2020 | JP | 2022-136081 | A | |
| JP | 2020-200517 | A | 17 December 2020 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021063300 A
- JP 2022113002 A
- WO 2019106739 A
- WO 2022045252 A
- JP 2020029392 A
- JP 2020100896 A
- JP 2019203172 A
- JP 2023063000 A